(19) Europäisches Patentamt / European Patent Office / Office européen des brevets

(11) **EP 2 559 340 B1**

(12) **EUROPEAN PATENT SPECIFICATION**

(45) Date of publication and mention
of the grant of the patent:
**26.08.2015 Bulletin 2015/35**

(21) Application number: **11768923.2**

(22) Date of filing: **14.04.2011**

(51) Int Cl.:
*A23B 7/144* (2006.01)    *B65D 81/26* (2006.01)
*A23L 1/216* (2006.01)    *A23B 7/152* (2006.01)

(86) International application number:
**PCT/JP2011/059285**

(87) International publication number:
**WO 2011/129402 (20.10.2011 Gazette 2011/42)**

(54) **METHOD FOR POTATO SPROUT CONTROL**

VERFAHREN ZUR KONTROLLE DER KEIMUNG VON KARTOFFELN

PROCÉDÉ POUR LE CONTRÔLE DE POUSSES DE POMME DE TERRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.04.2010 JP 2010095470**

(43) Date of publication of application:
**20.02.2013 Bulletin 2013/08**

(73) Proprietor: **Mitsubishi Gas Chemical Company,
Inc.
Tokyo 100-8324 (JP)**

(72) Inventors:
• **OSHIDA Yutaka
Tokyo 101-0122 (JP)**
• **TAKEUCHI Teruo
Tokyo 101-0122 (JP)**
• **YUYAMA Megumu
Tokyo 101-0122 (JP)**

(74) Representative: **Hoffmann Eitle
Patent- und Rechtsanwälte PartmbB
Arabellastraße 30
81925 München (DE)**

(56) References cited:
JP-A- 9 023 740    JP-A- H0 923 740
JP-A- 2005 261 306    JP-A- 2010 094 059

• **PRANGE R K ET AL: "USING ETHYLENE AS A
SPROUT CONTROL AGENT IN STORED 'RUSSET
BURBANK' POTATOES", JOURNAL OF THE
AMERICAN SOCIETY FOR HORTICULTURAL
SCIENCE, AMERICAN SOCIETY FOR
HORTICULTURAL SCIENCE, ALEXANDRIA, VA,
US, vol. 122, no. 3, 1 May 1998 (1998-05-01), pages
463-469, XP001202645, ISSN: 0003-1062**
• **WILLS R B H ET AL: "Effect of low levels of
ethylene on sprouting of potatoes in storage",
HORTSCIENCE, AMERICAN SOCIETY OF
HORTICULTURAL SCIENCE, ALEXANDRIA, VA,
US, vol. 39, no. 1, 1 January 2004 (2004-01-01),
pages 136-137, XP008164540, ISSN: 0018-5345**
• **MITSURU FUJIOKA ET AL.: 'Ethylene Shori ni
yoru Kako-yo Jagaimo no Me no Seicho Yokusei'
HOKKAIDO BRANCH OF THE JAPANESE
SOCIETY OF AGRICULTURAL MACHINERY
KAIHO 2005, pages 83 - 87**
• **RINA KOYAMA ET AL.: 'Ethylene Shori ni yoru
Namashoku-yo Jagaimo no Hoga Yokusei'
HOKKAIDO BRANCH OF THE JAPANESE
SOCIETY OF AGRICULTURAL MACHINERY
KAIHO 2003, pages 75 - 77**
• **JUN'ICHI HIMOTO: 'Shokubutsu Hormone -
Ethylene ni yoru Bareisho no Hoga Yokusei'
NOSANBUTSU RYUTSU GIJUTSU KENKYUKAI
KAIHO 2009, pages 7 - 9**

EP 2 559 340 B1

## Description

CROSS-REFERENCE TO RELATED APPLICATION

This application is based upon and claims the benefit of priority from the prior Japanese Patent Application No. 2010-095470 (filed on April 16, 2010).

TECHNICAL FIELD

The present invention relates to a method for inhibiting sprouting of potatoes.

BACKGROUND ART

Potatoes start sprouting together with the end of endogenous dormancy, and buds grow. Sprouted potatoes cause the decrease in productivity, demand additional work for removing the sprouted parts, and further induce highly toxic solanine at the sprouted parts thus leading to lowing of the commercial value.

In the pick-up points of potato-producing districts, the sprouting of potatoes, which depend on varieties, tend to be suppressed by storing them at low temperatures of 1 to 3 °C, but cannot be suppressed completely. The storage of potatoes at low temperatures may cause deteriorations in quality such as the degradation of taste due to the increase in reducing sugar or the browning during the process. On the other hand, the storage of potatoes at a temperature of 15 °C or more will accelerate the deterioration in quality due to the distinguishing growth of buds during the storage and the growth of mildew. Thus, the sprouting of potatoes will be further promoted due to the variation of conditions including the ascend of temperature during the distribution process which includes the packing of potatoes from storage house in distribution containers such as cardboard, plastic bag and the like for transporting the packages to distributors or volume sellers, and the counter selling of potatoes as an item packed in a small plastic bag.

Therefore, it is desired to use an insulated van or to provide a refrigerator, which is restricted from economy and colocation facility.

Agricultural chemicals such as maleic hydrazide and chloropropham or cobalt radiation had been used for inhibiting germination of potatoes. However, these methods have been voluntarily abandoned or restricted because of the problem of residual agricultural chemicals or insecurity for safety.

Therefore, as an alternative of these methods, a method for storing potatoes by providing ethylene having high safety to inhibit germination under darkness at a low temperature has been proposed (Japanese Patent Laid-Open Publication No. 9-23740). Ethylene, which is a plant hormone, is known to have the effects of inhibiting germination and sprouting ("Kongetsu-no-Nohgyo" (Agriculture of This Month), 50 (7), 2006, p. 55; The Chemical Daily), and is also expected to have a certain degree of the inhibiting effect of sprouting during the storage of potatoes.

However, ethylene has also been described to have the effect of promoting the germination of potatoes (The Science Reports of Faculty of Agriculture, Kobe University, 15, 255-260, 1983, Hirofumi Terai; Plant Physiol., 53(1974), 658-662, I. Rylsky, L. Rappaport, H. Pratt (UC, Davis)). Therefore, ethylene must be used in an appropriate manner.

Potatoes have recently been provided for distribution and sale after storage in the form of a small size plastic package after washing them with water for the purpose of adding value to potatoes. In this case, potatoes cannot be maintained at a low temperature which is preferred for inhibiting the germination, because of the interruption of ethylene atmosphere and the increase of temperature during the period from washing to film packing. Thus, ethylene may often promote the sprouting in the case of the distribution of potatoes under ethylene atmosphere.

JP H09 23740 A relates to a method for storing root vegetables such as potatoes or onions in which the root vegetables are stored in a storehouse, while preventing germination. The interior of the storehouse is controlled at 0-20°C and maintained in dark state. The interior of the storehouse is further controlled in a low ethylene gas concentration atmosphere by disposing an ethylene gas-generating material or charging the ethylene gas from the outside, while maintaining the inside of the storehouse under conditions comprising a high humidity and oxygen and carbon dioxide concentration near to those of air. The concentration of the ethylene gas in the storehouse is controlled at 0.01-5000 ppm.

R. K. Prange et al. reports in J. Amer. Soc. Hort. Sci. 1998, 123(3), 463-469 on the effect of ethylene on tuber sprout growth and quality in potato in laboratory and commercial studies for 6 and 3 years, respectively, in comparison with untreated (laboratory study) and CIPC treated tubers (laboratory and commercial studies). In both studies, ethylene was applied continuously at 166 $\mu$mol·m$^{-3}$ for at least 25 weeks. In the laboratory study, ethylene delayed the appearance of sprouts for 5 to 15 weeks, compared with untreated tubers. In the ethylene-treated tubers in both studies, sprouts appeared after 15 weeks but did not exceed 12 and 59 mm in the laboratory and commercial studies, respectively.

R. B. H. Wills et al. reports in HortScience 2003, 39(1), 136-137 on the effect of low levels of ethylene on sprouting of potatoes in storage. Potato tubers were stored at 20°C in air containing ethylene at < 0.005, 0.01, 0.1, 1.0 or 10 $\mu$L/L and the level of sprouting was measured over 35 days. The time for tubers to develop an average of one sprout per tuber was found to linearly increase as the $\log_{10}$ ethylene concentration decreased with the effect present over the whole range of the concentration. After 35 days of storage, the number of sprouts/tuber was inversely related to the ethylene concentration, but the weight of sprouts was only lower for tubers held in < 0.005 μL/L ethylene.

M. Fujioka et al. reports in Hokkaido Branch of the Japanese Society of Agricultural Machinery, 2005, 45, 83-87 on an effective method for suppressing the growth of potato shoots, which cause problems in the processing of potatoes, increase the amount of waste matter and reduce the quality of potatoes. The possibility is investigated to achieve a long-term effect of ethylene on stored potatoes by slow release of ethylene from activated charcoal in which ethylene has been absorbed. Potatoes were placed in a cardboard box together with activated charcoal with absorbed ethylene and stored at 12°C. The results of the experiment showed that the sprouting and growth of potato shoots were suppressed compared to those of control potatoes.

R. Koyama et al. reports in Hokkaido Branch of the Japanese Society of Agricultural Machinery, 2003, 43, 75-77 on a method for maintaining of fresh potatoes stored for a long duration. In this study, sprouting of potatoes stored for various durations in an atmosphere containing ethylene was examined, and it was found that sprouting of potatoes during storage can be controlled by ethylene treatment.

J. HIMOTO reports in Hokkaido Branch of the Japanese Society of Agricultural Machinery, 2009, 277, 7-10 on the inhibition of sprouting of potato tubers by the plant hormone ethylene. The potatoes are stored in a container with an ethylene content of 2 or 4 ppm at a temperature of 8°C.

SUMMARY OF THE INVENTION

The present inventors have now found a new method for effectively inhibiting the sprouting of potatoes in the process from the storage step of potatoes after harvest, through the steps of washing with water, drying and packing into a film package for retail, to the distribution step. Specifically, the present inventors have succeeded in effectively inhibiting the sprouting of potatoes during the practical distribution period of 20 days or less by releasing the potatoes stored for a long period under the atmosphere of a specific concentration of ethylene from the ethylene atmosphere, subsequently washing with water, appropriately controlling the dryness at the surface of the potatoes, which were then film-packaged for retail, and maintaining the potatoes under the atmosphere of a specific concentration of ethylene which was brought about with an ethylene generating package and the particular package for distribution. That is, on the inhibition of sprouting of the potatoes by film-packaging for retail the potatoes together with the ethylene generating package and thus maintaining the constant ethylene concentration within the distribution container, the effective inhibition of sprouting and also of the growth of mold could have been done by removing soil, mud and dirt from the surface of the potatoes to be sealed by washing with water, draining and drying the potatoes to a suitable level.

The present invention is based on these findings.

The present invention aims at providing a suitable method for inhibiting sprouting of potatoes throughout the whole distribution processes, in which the potatoes have been stored for a long period under an ethylene atmosphere, washed and dried for added value, packaged in plastic film bags for retail, and delivered to the distribution step.

That is, the present invention relates to the following methods (1) to (3) for inhibiting sprouting of potatoes.

(1) A method for inhibiting sprouting of potatoes, comprising the steps of:

(A) washing potatoes stored at a temperature of 2 to 15 °C under the atmosphere of an ethylene concentration of 1 to 100 ppm for 3 to 12 months with water to remove soil and dirt, draining, and drying;
(B) receiving the potatoes together with an ethylene generating package having an ethylene generating rate of 0.5 to 5 ml/(g · day) at 20°C and 100% RH in a distribution container of a polyolefin bag having pores on its surface prior to tight sealing of the bag; and
(C) maintaining the ethylene concentration in 1 to 100 ppm at a temperature of 2 to 30 °C for 1 to 20 days within the distribution container in which the potatoes are sealed tightly,
which comprises drying to an extent that the surface of the potatoes is not completely dried after washing with water and draining.

(2) A method according to (1), which further comprises drying the potatoes to an extent that the water content attached to the surface of the potatoes after washing with water and draining (percentage of attached water content) is in the range from more than 0 to 30 or less with a measure that the water content attached to the surface of the potatoes just after washing with water and draining (percentage of attached water content) is regarded as 100 and the water content of the potatoes of which surface has been completely dried as 0.

(3) A method according to any one of (1) to (2), wherein the step (C) is carried out in the distribution process of potatoes.

In this connection, another embodiment of the present invention includes the following:

A method for inhibiting sprouting of potatoes comprising the four steps of A) a step of storing potatoes at a temperature of 2 to 15 °C under the atmosphere of ethylene concentration of 1 to 100 ppm for 3 to 12 months; B) a step of water washing and drying to remove soil and dirt from potatoes, C) a step of film packaging and receiving potatoes together with a distribution container of an ethylene generating package at an ethylene generating rate of 0.5 to 5 ml/(g · day) at 20°C and 100% RH in a polyolefin bag provided with pores, and sealing the bag tightly; and D) a step of distributing the distribution container for 1 to 20 days at a temperature of 2 to 30 °C while adjusting the ethylene concentration in the distribution container to 1 to 100 ppm.

According to the present invention, the freshness of potatoes can be safely and economically maintained by delaying the sprouting of the potatoes in the distribution step of the potatoes by washing with water, drying to an appropriate degree and packaging into a bag after storage of the harvested potatoes for a long period. That is, according to the present invention, a novel method for distributing and storing potatoes, which may effectively inhibit the sprouting, can be provided.

DETAILED DESCRIPTION OF THE INVENTION

Potatoes are generally stored in a storehouse or the like for a long period (storage process) except the case of the consumption just after harvest, and are delivered from the storehouse, washed, packaged into bags, and fallen into the hands of consumers through distribution channels (distribution process). The present invention can be appropriately used as a storage method for inhibiting sprouting of potatoes which had hitherto caused problems in the distribution step.

In this connection, the ethylene concentration described herein is a value calculated on the basis of the volumes of ethylene and gases other than ethylene, and can be determined by the conventional methods.

Potatoes which may be applied to the present invention include without limitation those derived from any varieties, production areas or provenances. Specific examples includes, for example, "May Queen", "Baron", "Hokkai Kogane", "Red Andes", "Inka no Mezame", "Kita Hime", "Toyoshiro", "Snowden", "King Edward", "Desiree", "Estima", "Organic Nicola", "Russet Burbank", and the like. The present invention aims at the potatoes apt to sprout particularly in the distribution step after the storage process for a long period, dried to an appropriate degree after washing with water, film packaged for retail, maintained and distributed. The potatoes subjected to such treatments are apt to sprout due to temporary increase in temperature or external load.

A method for inhibiting sprouting of potatoes according to the present invention and the prerequisite process thereof are described in order with every step as described in the following.

## Step (A):

In the method of the present invention, the step (A) means the step in which potatoes stored at a temperature of 2 to 15 °C under the atmosphere of ethylene concentration of 1 to 100 ppm for 3 to 12 months are washed with water to remove soil and dirt, drained, and, if necessary, dried.

### [Storage step]

In the step (A), potatoes stored in the predetermined condition are used.

Potatoes are generally stored once in a storehouse or the like when they are not consumed immediately after harvest. In the present invention, potatoes having been stored at a temperature of 2 to 15 °C under the atmosphere of ethylene concentration of 1 to 100 ppm for 3 to 12 months are used. A process of having been stored the potatoes to be used may be hereinafter referred to as the "storage step".

The area of storing the potatoes used in the present invention is not specifically limited, and any areas in which the temperature range and ethylene concentration range described above are maintained may be selected as the storage area. In the present invention, an enclosed space in which temperature control or ethylene concentration control may be readily carried out such as storehouse, refrigerator and container is preferably used as a storage area. Among other things, a storehouse provided with an ethylene gas generator for supplying ethylene gas from an ethylene gas cylinder through a pressure control valve and a gas flow meter so that the ethylene concentration in the storehouse is maintained within the range described above is preferred since the ethylene concentration can be easily controlled without fail. Furthermore, it is more preferred to use an ethylene concentration control system for automatically controlling a switch of a pressure control metering valve with detecting the ethylene concentration within the storehouse by gas chromatography as the ethylene gas generator, since the ethylene concentration can be easily controlled without fail. In this connection, potatoes may also be stored within any storage container in the storage area. The storage container of potatoes is not specifically limited, metallic, plastic and wooden containers, paper, plastic and fabric bags, and baskets are used depending on the capacity of the storehouse. As the storage container of potatoes, a lattice-like steel mesh container having good breathability is preferred.

Temperature of storing potatoes in the storage step is preferably in a temperature of 2 to 15°C, more preferably 3 to 10°C. If the storage temperature is lower than 2°C, deterioration in quality such as the change in the taste of potatoes due to the increase of reducing sugars and the browning in processing occurs. Moreover, if the storage temperature is higher than 15 °C, the sprouting during storage may become prominent and further the deterioration in quality may also be accelerated due to the growth of molds.

The ethylene concentration of storing potatoes in the storage step is preferably in the range of 1 ppm or more, more preferably 3 ppm or more. Among other things, the ethylene concentration in the range of 3 to 100 ppm is preferred from both economic and safety aspects. If the ethylene concentration is lower than 1 ppm, the effect of inhibiting sprout generally becomes worse. If the ethylene concentration is in the range of 30000 ppm or more, the concentration is within the explosion limit of ethylene. Further, while the method for controlling the ethylene concentration in the storage step is not specifically limited, a method for supplying ethylene gas from an ethylene gas cylinder with controlling the ethylene concentration is preferred from the viewpoint of easiness and safety in the concentration control.

In the storage step, 3 months or more from the time of initiating the storage of potatoes are needed as the period of storing potatoes, during which potatoes need continuous storage under the ethylene atmosphere. If potatoes are stored for a short period of 3 months or less or intermittently under the ethylene atmosphere, treatment with ethylene may conversely promote sprouting. Moreover, if the potatoes are stored for 12 months or more, the benefit of the storage for a long period will be lost unfavorably since potatoes harvested afresh on the next year start shipping. Therefore, in the storage step herein described, the period of storing potatoes is preferably in the range of 3 to 12 months, more preferably 3 to 9 months in consideration of the freshness of potatoes.

**[Water washing and drying step]**

In the step (A) of the present invention, the potatoes stored as described above, that is, the potatoes from the storage step are washed with water to remove soil and dirt, drained, and, if necessary, dried. In this connection, the process involving water washing, draining and drying is herein referred to as "water washing and drying step".

In the water washing and drying step, potatoes are washed with water by the usual washing methods with spray, brash, rotary drum washing machine, or the like to remove soil and dirt, and drained prior to the maintaining step from the storage step. The potatoes are then dried appropriately during the course from transport with belt conveyer, hopper or the like to filling and packaging.

Water washing of potatoes means the removal of soil and dirt remained on and attached to the surface of potatoes after the storage according to the storage step, and the water washing is desirably conducted to an extent that persons skilled in the art can recognize the removal of dirt or the like. After water washing of potatoes, water remaining on the potatoes is removed by draining.

Draining can be carried out, for example, by rotary drum washing in which the drum is rotated without the use of washing water. By way of example, a horizontal or tilting type stainless mesh drum having a diameter of 1 to 2 m and a length of 2 to 10 m is used at the rotation speed of 10 to 30 rpm. In addition, draining can be conducted, for example, by air cut by means of air blast to the outlet of a carrier conveyer, fluctuation during conveyer transport, or primary storage in a storage hopper.

If draining after water washing and further drying of potatoes depending on cases is not appropriate, mold or unsatisfactory inhibition of sprouting may occur afterwards in the course of maintaining potatoes in a distribution container.

In the step of further drying of potatoes after water washing and draining, potatoes can be dried in the course of transport from the place where the potatoes were washed with water until the filling into a distribution container by means of, for example, drying by transfer or leaving alone, air drying, drying with ventilation, hot-air drying, drying by centrifugation, air injection (air cutter) drying, wipe off drying, and the like. Effective drying can be preferably done by drying with ventilation or air injection (air cutter) drying.

Potatoes having been washed with water and drained are dried to an appropriate extent. In this connection, drying to an appropriate extent means the state of potatoes that at least a certain amount of water attached to the surface of potatoes has been removed, namely, drying after water washing and draining to an extent that the surface of the potatoes has not been completely dried.

In this regard, the amount of water attached to the surface of potatoes, that is, "the degree of attached water (X)" can be defined by the following equation:

$$X = (C-D) / (B-D) \times 100$$

wherein A to E represent the following meanings:

A: weight of potatoes before washing,
B: weight of potatoes immediately after water washing (potatoes in the state that no water falls in drops from the surface, that is, the weight of potatoes after draining),
C: weight of potatoes to be tested,
D: weight of potatoes having the surface dried (weight of potatoes having mud removed from the surface; D = A-E)
E: weight of mud (increase in the weight of a filter paper through which total washing water recovered has been filtered and then dried).

In this connection, water washing and drying are conducted only for a short time, and thus variation of water content of potatoes is negligible.

More specifically, when the water content (the degree of attached water) of the potatoes immediately after water washing and draining is regarded as 100 and the water content (the degree of attached water) of the potatoes having been completely dried as 0, it is desirable to dry potatoes after water washing and draining so that will be in the range of more than 0 to 30 or less. Preferably, drying is carried out so as the degree of attached water to be in the range of more than 0 to 20 or less.

### Step (B):

In the method of the present invention, the step (B) is a step for receiving potatoes together with an ethylene generating package having an ethylene generating rate of 0.5 to 5 ml/(g day) under an atmosphere of 100% RH (relative humidity) at 20°C in a distribution container of a polyolefin bag having pores on its surface prior to tight sealing of the bag. In this regard, the ethylene generating rate represents the value per g of the ethylene generating agent.

This process may be referred to hereinafter as "the film packaging step".

### [Film packaging step]

In the film packaging step, the potatoes after water washing - drying step are received together with an ethylene generating package in a distribution container for retail of a polyolefin bag having pores on its surface prior to tight sealing of the bag. In the water washing - drying step and the film packaging step described above, the sprouting of potatoes cannot be effectively inhibited unless the potatoes immediately after the storage step are used.

In the film packaging step, an ethylene generating package in which an adsorptive carrier having ethylene adsorbed thereon has been packed with a breathability packaging material is used. As the adsorptive carrier, zeolite, diatomaceous earth, silica gel, active carbon, and the like are used, but zeolite is preferred from the viewpoint of its adsorption capacity and economic efficiency. In addition, as regards the ethylene generating package, it is preferable to use an adsorptive carrier (ethylene generating agent) which has preliminarily adsorbed ethylene in an amount of 10 to 30 mg/g, preferably15 to 25 mg/g from the viewpoint of the adjustment of ethylene concentration. In this connection, the ethylene generating package needs continuous generation of ethylene so as the potatoes to be exposed to ethylene atmosphere during the period of distribution step, and thus a breathability packaging material for particular ethylene generating package is used on that account.

As the breathability packaging material in the ethylene generating package, any ethylene generating package which maintains a predetermined ethylene generating rate can be used without limitation. More specifically, in the present invention, the breathability packaging material may have a complex structure comprising exterior and interior packaging materials, in which the types of the exterior and interior packaging materials may be properly combined to make a breathability packaging material.

In this case, as the exterior packaging material for the breathability packaging material in the ethylene generating package, any types of film materials having poor permeability to ethylene including for example, polyethylene terephthalate, polyamide (nylon), biaxial oriented polypropylene, and the like; aluminum deposited films or silica deposited films can be used without limitation.

Furthermore, as an interior packaging material for the breathability packaging material in the ethylene generating package, polyethylene is optimal, and unstretched polypropylene may also be used.

The preferred breathability packaging material of the present invention is made by laminating three raw materials of a polyethylene terephthalate-polyethylene laminated film provided with pores, paper or nonwoven fabric and a polyethylene film in this order by heating or with adhesive. This polyethylene terephthalate-polyethylene laminated film provided with pores has the pores having a diameter in the range of 100 to 1000 $\mu$m, preferably 200 to 400 $\mu$m, the number of the pores in the range of 10 to 100/$cm^2$, preferably 20 to 40/$cm^2$, and the thickness of the polyethylene film in the range of 30 to 50 $\mu$m, so that the object of the film is achieved. The polyethylene film preferably includes low density polyethylene and linear low density polyethylene.

The ethylene generating function of the breathability packaging material in the presence of potatoes is controlled by the moisture permeability of the package, and the moisture permeability by the cup method is in the range of 5 to 30 $g/m^2$ day at 40°C under the atmosphere of 90% RH, preferably 10 to 20 $g/m^2$ · day. The moisture permeability of the breathability packaging material is controlled by the permeability of the polyethylene film and the pores on the surface lamination.

The ethylene generating rate of the ethylene generating package of the present invention is in the range of 0.5 to 5 ml/day, preferably 1 to 4 ml/day per gram of the ethylene generating agent at 20 °C under the atmosphere of 100% RH.

In the present invention, the method for packaging an adsorptive carrier having ethylene adsorbed thereon with a breathability packaging material is not specifically limited, and includes, for example, three sided seal packaging, four sided seal packaging, stick package, and the like.

As the distribution container for retail of the present invention, a plastic film such as polyolefin or polystyrene is appropriately used for exposing effectively potatoes to the atmosphere of ethylene, and in this case, it is desirable to provide pores on the surface of the film for preventing the occurrence of mold. The pores may be made by any of sticking a pin through the film or by making pores with a heated pin or with laser, and the pore diameter is preferably in the range of 5 to 500 $\mu$m with a rate of pore area in the range of 0.01 to 1%. If the pore diameter becomes larger, the ethylene concentration will be decreased in the neighborhood of the pores, which promotes the sprouting.

In the present invention, the ethylene permeability of the distribution container is preferably in the range of 1 to 3000 ml/($m^2$ · day · atm).

The amount of potatoes packed in a distribution container for retail is in the range of 500 g to 3 kg, and the adsorptive carrier of the ethylene generating package applied thereto has, for example, in the range of 0.2 g to 2 g. The ethylene generating package packed with a breathability packaging material has a rectangular shape of the packaging manner described above and is made for example in the combination of a length of 30 to 50 mm and a width of 30 to 50 mm. The package will not depend on its shape.

## Step (C):

In the method according to the present invention, step (C) means a step that the ethylene concentration in the distribution container is maintained in the range of 1 to 100 ppm at a temperature of 2 to 30°C for 1 to 20 days. This process is referred to hereinafter as "maintenance step" or "distribution step".

### [Maintenance (distribution) step]

During the distribution of potatoes in this step, the ethylene concentration in the distribution container is preferably in the range of 1 to 100 ppm, more preferably 4 to 50 ppm. If the ethylene concentration is lower than 1 ppm, the effect for inhibiting sprouting is unfavorably decreased.

In this step, the temperature on maintaining or distributing the distribution container in which potatoes and the ethylene generating package are received is preferably in the range of 2 to 30°C, and more preferably 5 to 20 °C. If the temperature is lower than 2 °C, deterioration in quality such as the change in the taste of potatoes due to the increase of reducing sugars and the browning in processing occurs. Moreover, if the storage temperature is higher than 30 °C, the sprouting during distribution may become prominent and further the deterioration in quality may also be accelerated due to the growth of molds. In this connection, the period of this step is preferably in the range of 1 to 20 days, more preferably 1 to 15 days. If distribution in view of ethylene generating capacity and freshness of potatoes. If the distribution period exceeds 20 days, sprouting tends to proceed unfavorably; whereas if the period is 1 day or less, the potatoes are likely to fall in the hands of consumers before the progress of sprouting, and thus the benefit of conducting the present invention becomes exiguous.

In the present invention, potatoes are subjected to the supply of ethylene in the storage step, drying to a moderate extent after washing with water in the water washing - drying step (step (B)), and further the supply of ethylene from the ethylene generating package in the maintenance (distribution) step (step (C)), and thereby synergistic sprouting inhibiting effects can be exhibited rather than separate sprouting inhibiting effects. Thus, the present invention relates to a method for inhibiting sprouting of potatoes by using ethylene as a phytohormone and is characterized in extremely high safety as compared with the conventional method for inhibiting sprouting with agricultural chemicals such as maleic hydrazide or chloropropham or by exposing to cobalt radiation. Furthermore, in the method of the present invention, potatoes need not to be stored and distributed at low temperatures of 2 °C or less for inhibiting sprouting, so that deterioration in quality due to chilling injury can be avoided and large economic effect can also be expected.

EXAMPLES

The present invention is next described further in detail by examples. In this connection, the present invention is not limited to the following examples.

<u>Method for Determining Ethylene Concentration</u>

Measuring apparatus: "Gas Chromatograph GC-2014", Shimadzu Seisakusho, Ltd.;
Measurement condition: The ethylene concentration was measured with a 3Φ1.5 m column packed with 60 to 80 mesh alumina and $N_2$ carrier gas at the FID temperature of 200°C (injection port: 100 °C).

<u>Method for Measuring of Ethylene Generating Rate</u>

Measurement condition: Ethylene generating rate of an ethylene generating package was calculated by measuring the ethylene concentration in the hermetic nylon bag having silica deposited thereon, in which 1 g of zeolite having 20 mg of ethylene adsorbed thereon and packaged with a breathability packaging material (length 40 mm x width 45 mm) and an absorbent cotton containing water were tightly sealed together with 1 l of air, after 24 hours at 20 °C and 100% RH.

<u>Making of "ethylene generating package A"</u>

An ethylene generating package A was obtained by packaging 1 g of zeolite having 20 mg of ethylene adsorbed thereon with a breathability packaging material (length 40 mmx width 45 mm) having a thickness of 120 $\mu$m and a moisture permeability of 17 g/($m^2$ day) (40°C, 90% RH), which is made by laminating a polyethylene terephthalate-polyethylene laminated film provided with 20 pores/$cm^2$ and having a thickness of 40 $\mu$m, 40 g/$m^2$ of paper and a polyethylene film having a thickness of 30 $\mu$m in this order, by facing the polyethylene side inward. This ethylene generating package has an ethylene generating rate of 2.8 ml/( g·day) (20°C, 100% RH).

<u>Making of "ethylene generating package B"</u>

An ethylene generating package B was obtained by packaging 1 g of zeolite having 20 mg of ethylene adsorbed thereon with a breathability packaging material (length 40 mmx width 45 mm) having a thickness of 120 $\mu$m and a moisture permeability of 50 g/($m^2$ · day) (40°C, 90% RH), which is made by laminating a polyethylene terephthalate-polyethylene laminated film provided with 20 pores having a diameter of 300 $\mu$m/$cm^2$ and having a thickness of 40 um, 40 g/$m^2$ of paper and a pored polyethylene film provided with 25 pores having a diameter of 300 $\mu$m/$cm^2$ and having a thickness of 30 $\mu$m in this order, with facing the polyethylene side inward. This ethylene generating package has an ethylene generating rate of 11.6 ml/( g · day) (20°C, 100% RH).

<u>Making of "ethylene generating package C"</u>

An ethylene generating package C was obtained by packaging 1 g of zeolite having 20 mg of ethylene adsorbed thereon with a breathability packaging material (length 40 mmx width 45 mm) having a thickness of 120 $\mu$m and a moisture permeability of 4 g/($m^2$ · day) (40 °C, 90% RH), which is made by laminating a polyethylene terephthalate-polyethylene laminated film provided with 4 pores having a diameter of 300 $\mu$m/$cm^2$ and having a thickness of 40 $\mu$m, 40 g/$m^2$ of paper and a polyethylene film having a thickness of 30 $\mu$m in this order, with facing the polyethylene side inward. This ethylene generating package has an ethylene generating rate of 0.3 ml/( g · day) (20 °C, 100% RH).

<u>Storage Process and Water Washing and Drying Process of Potatoes</u>

Immediately after the potatoes "May Queen" (20 kg) were received in a polyethylene basket container, the potatoes were immediately stored in a cooling box having an inner volume of 704 l. Ethylene gas was injected from a stainless plumbing having a diameter of 5 mm from a 10 kg ethylene gas cylinder through the primary and secondary pressure control valves with pressures of 4 kgf/$cm^2$ and 0.04 to 0.05 kgf/$cm^2$, respectively, into the cooling box to control the ethylene concentration in the cooling box in the range of 5 to 10 ppm.
After the storage at a temperature of the cooling box controlled to 7 to 8°C for a period of 3 months, the potatoes were taken out from the cooling box, washed with water, drained in the dewatering bin of a washing machine, blast dried to an extent of 18 of the degree of attached water, and subjected to test.

In this connection, the degree of attached water was calculated as follows.

The potatoes in each stage had the weights as follows:

Weight of the stored potatoes: 20.00 kg (average rate of attached mud: 0.2%),
Weight of the potatoes immediately after water washing: 20.07 kg,
Weight of the potatoes used for the test: 19.98 kg,
Weight of the surface dried potatoes: 19.96 kg.

From these results of measurement, the degree of attached water was calculated as follows:

$$\text{The degree of attached water} = (19.98 - 19.96)/(20.07 - 19.96) \times 100 = 18.18$$

Example 1:

"May Queen" (1 kg) prepared as described above and the ethylene generating package A were packed in a polyethylene bag provided with 4 pores having a diameter of 400 $\mu$m/cm$^2$ and having a thickness of 40 $\mu$m, received in a cardboard box (length16.5 cm x width 16.5 cm x height 10.5 cm), sealed with a packaging tape and stored in a room at 18 to 21 °C for 2 weeks. The cardboard box was opened with the passage of time to measure the ethylene concentration in the polyethylene bag by gas chromatography and the sprouting state of potatoes was observed with naked eye. The results are shown in Table 1.

Comparative Example 1:

Potatoes and the ethylene generating package were packed in a polyethylene bag in the same manner as Example 1 except the use of the ethylene generating package B, received in the cardboard box and then stored. The cardboard box was opened with the passage of time to measure the ethylene concentration in the polyethylene bag by gas chromatography and the sprouting state of potatoes was observed with naked eye. The results are shown in Table 1.

Comparative Example 2:

Potatoes and the ethylene generating package were packed in a polyethylene bag in the same manner as Example 1 except the use of the ethylene generating package C, received in the cardboard box and then stored. The cardboard box was opened with the passage of time to measure the ethylene concentration in the polyethylene bag by gas chromatography and the sprouting state of potatoes was observed with naked eye. The results are shown in Table 1.

Comparative Example 3:

Potatoes were packed in a polyethylene bag in the same manner as Example 1 except the absence of the ethylene generating package, received in the cardboard box and then stored. The cardboard box was opened with the passage of time to measure the ethylene concentration in the polyethylene bag by gas chromatography and the sprouting state of potatoes was observed with naked eye. The results are shown in Table 1.

[Table 1]

| Number of days elapsed | (Days) | 1 | 2 | 4 | 7 | 11 | 14 |
|---|---|---|---|---|---|---|---|
| Example 1 | Ethylene concentration | 10 | 12 | 16 | 8.0 | 4.0 | 2.0 |
| | Germ length | 0 | 0 | 0 | 0 | 0 | 0 |
| Comparative Example 1 | Ethylene concentration | 45 | 25 | 7.0 | 0.8 | 0.2 | 0 |
| | Germ length | 0 | 0 | 0 | 0.5 | 1.5 | 3 |
| Comparative Example 2 | Ethylene concentration | 2 | 3 | 1 | 0.8 | 0.5 | 0.2 |
| | Germ length | 0 | 0 | 0 | 0.5 | 1.0 | 2 |

(continued)

| Number of days elapsed | (Days) | 1 | 2 | 4 | 7 | 11 | 14 |
|---|---|---|---|---|---|---|---|
| Comparative Example 3 | Ethylene concentration | 0 | 0 | 0 | 0 | 0 | 0 |
| | Germ length | 0 | 0 | 0.5 | 1.5 | 3 | 5 |
| Ethylene concentration: ppm, Germ length: mm | | | | | | | |

In Example 1, ethylene was continuously generated for keeping the polyethylene bag at the proper ethylene concentration, and the germination was inhibited appropriately. In Comparative Example 1, ethylene was generated in a large amount at an initial stage, but the ethylene concentration in the polyethylene bag was decreased rapidly with the passage of days and the effect for inhibiting germination was recognized more distinctly than in Comparative Example 3 but lower than Example 1. In Comparative Example 2, ethylene was generated only retardingly and the ethylene concentration in the polyethylene bag was maintained at a low level, so that the effect for inhibiting germination was recognized more distinctly than in Comparative Example 3 but lower than Example 1.

Example 2:

The potatoes "May Queen" (1 kg) washed with water and drained were used without drying (in the degree of attached water of 100). The potatoes "May Queen" (1 kg) and the ethylene generating package A were packed in a polyethylene bag provided with 4 pores having a diameter of 400 $\mu$m/cm$^2$ . and having a thickness of 40 $\mu$m, received in a cardboard box (length16.5 cm x width 16.5 cm x height 10.5 cm), sealed with a packaging tape and stored in a room at 18 to 21°C for 2 weeks. The cardboard box was opened with the passage of time to measure the ethylene concentration in the polyethylene bag by gas chromatography and the sprouting state of potatoes was observed with naked eye. The results are shown in Table 2 together with Example 1.

[Table 2]

| Number of days elapsed | (Days) | 1 | 2 | 4 | 7 | 11 | 14 |
|---|---|---|---|---|---|---|---|
| Example 1 | Ethylene concentration | 10 | 12 | 16 | 8.0 | 4.0 | 2.0 |
| | Germ length | 0 | 0 | 0 | 0 | 0 | 0 |
| | Existence of mold | - | - | - | - | - | - |
| Example 2 | Ethylene concentration | 10 | 12 | 16 | 8.0 | 4.0 | 2.0 |
| | Germ length | 0 | 0 | 0 | 0 | 0 | 0.5 |
| | Existence of mold | - | - | - | - | + | ++ |
| Ethylene concentration: ppm; Germ length: mm Existence of mold: -: none; +: several molds; ++: many molds | | | | | | | |

## Claims

1.   A method for inhibiting sprouting of potatoes, comprising the steps of:

(A) washing potatoes stored at a temperature of 2 to 15°C under the atmosphere of an ethylene concentration of 1 to 100 ppm for 3 to 12 months with water to remove soil and dirt, draining, and drying;
(B) receiving the potatoes together with an ethylene generating package having an ethylene generating rate of 0.5 to 5 ml/(g · day) at 20°C and 100% RH in a distribution container of a polyolefin bag having pores on its surface prior to tight sealing of the bag; and
(C) maintaining the ethylene concentration in 1 to 100 ppm at a temperature of 2 to 30°C for 1 to 20 days within the distribution container having the potatoes sealed tightly,
which comprises drying to an extent that the surface of the potatoes is not completely dried after washing with water and draining.

2.   A method according to Claims 1, which further comprises drying of the potatoes to an extent that the water content attached to the surface of the potatoes after washing with water and draining (percentage of attached water content) is in the range from more than 0 to 30 or less with a measure that the water content attached to the surface of the potatoes just after washing with water and draining (percentage of attached water content) is regarded as 100 and the water content of the potatoes of which surface has been completely dried as 0.

3. A method according to any one of Claims 1 to 2, wherein the step (C) is carried out in the distribution process of potatoes.


**Patentansprüche**

1. Verfahren zur Unterdrückung des Keimens von Kartoffeln, das die folgenden Schritte umfasst:

(A) Waschen von Kartoffeln, die bei einer Temperatur von 2 bis 15°C unter eine Atmosphäre mit einer Ethylenkonzentration von 1 bis 100 ppm 3 bis 12 Monate lang gelagert wurden, mit Waser, um Erde und Schmutz zu entfernen, Ablaufenlassen und Trocknen;
(B) Aufnahme der Kartoffeln zusammen mit einer Ethylen-Erzeugungspackung, die eine Ethylen-Erzeugungsrate von 0,5 bis 5 ml/(g·Tag) bei 20°C und 100 % relativer Feuchte aufweist, in einen Distributionsbehälter aus einer Polyolefintasche, die Poren auf ihrer Oberfläche aufweist, vor dem dichten Versiegeln der Tasche; und
(C) Aufrechterhalten der Ethylenkonzentration von 1 bis 100 ppm bei einer Temperatur von 2 bis 30°C über 1 bis 20 Tage im Distributionsbehälter mit den Kartoffeln unter dichtem Verschluß,
das weiterhin nach dem Waschen mit Wasser und dem Ablaufenlassen das Trocknen in einem Ausmaß umfasst, dass die Oberfläche der Kartoffeln nicht vollständig getrocknet ist.

2. Verfahren gemäß Anspruch 1, das weiterhin das Trocknen der Kartoffeln in einem Ausmaß umfasst, dass der nach dem Waschen und Ablaufenlassen an der Oberfläche der Kartoffeln anhaftende Wassergehalt (Prozentsatz des anhaftenden Wassergehalts) im Bereich von mehr als 0 bis 30 oder weniger liegt, mit der Maßgabe, dass der an der Oberfläche der Kartoffeln anhaftende Wassergehalt direkt nach dem Waschen mit Wasser und Ablaufenlassen (Prozentsatz des anhaftenden Wassergehalts) als 100 betrachtet wird, und der Wassergehalt von Kartoffeln, deren Oberfläche vollständig getrocknet ist, als 0 betrachtet wird.

3. Verfahren gemäß irgendeinem der Ansprüche 1 bis 2, worin Schritt (C) während des Vertriebs der Kartoffeln durchgeführt wird.


**Revendications**

1. Procédé destiné à empêcher la germination de pommes de terre, comprenant les étapes de :

(A) lavage des pommes de terre qui ont été stockées à une température de 2 à 15°C sous l'atmosphère d'une concentration d'éthylène de 1 à 100 ppm pendant 3 à 12 mois avec de l'eau afin d'enlever la terre et la saleté, égouttage et séchage ;
(B) réception des pommes de terre avec un conditionnement générant de l'éthylène ayant un taux de génération d'éthylène de 0,5 à 5 ml/(g·jour) à 20°C et 100 % de HR dans un récipient de distribution d'un sac en polyoléfine présentant des pores sur sa surface avant la fermeture hermétique du sac ; et
(C) maintient de la concentration d'éthylène entre 1 et 100 ppm à une température de 2 à 30°C pendant 1 à 20 jours dans le récipient de distribution dans lequel les pommes de terre sont hermétiquement enfermées,
qui comprend le séchage dans une mesure telle que la surface des pommes de terre n'est pas totalement séchée après le lavage à l'eau et l'égouttage.

2. Procédé selon la revendication 1, qui comprend en outre le séchage des pommes de terre dans une mesure telle que la teneur en eau fixée à la surface des pommes de terre après le lavage à l'eau et l'égouttage (pourcentage de teneur en eau fixée) est comprise dans la plage de plus de 0 à 30 ou moins, avec une mesure selon laquelle la teneur en eau fixée à la surface des pommes de terre juste après le lavage à l'eau et l'égouttage (pourcentage de teneur en eau fixée) est considérée comme étant de 100 et la teneur en eau des pommes de terre dont la surface a été totalement séchée comme étant de 0.

3. Procédé selon l'une quelconque des revendications 1 à 2, dans lequel l'étape (C) est réalisée lors du processus de distribution des pommes de terre.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010095470 A
- JP 9023740 A
- JP H0923740 A

**Non-patent literature cited in the description**

- Kongetsu-no-Nohgyo. The Chemical Daily, 2006, vol. 50, 55
- The Science Reports of Faculty of Agriculture. Hiro-fumi Terai, 1983, vol. 15, 255-260
- **I. RYLSKY ; L. RAPPAPORT ; H. PRATT.** *Plant Physiol.,* 1974, vol. 53, 658-662
- **R. K. PRANGE et al.** *J. Amer. Soc. Hort. Sci.,* 1998, vol. 123 (3), 463-469
- **R. B. H. WILLS et al.** *HortScience,* 2003, vol. 39 (1), 136-137
- **M. FUJIOKA et al.** *Hokkaido Branch of the Japanese Society of Agricultural Machinery,* 2005, vol. 45, 83-87
- **R. KOYAMA et al.** *Hokkaido Branch of the Japanese Society of Agricultural Machinery,* 2003, vol. 43, 75-77
- **J. HIMOTO.** *Hokkaido Branch of the Japanese Society of Agricultural Machinery,* 2009, vol. 277, 7-10